# EUROPEAN PATENT SPECIFICATION

(11) **EP 4 050 164 B1**
(45) Date of publication and mention of the grant of the patent: **19.11.2025**
(21) Application number: 20905930.2
(22) Date of filing: 28.08.2020
(51) Int. Cl.: E02F 9/20, E02F 9/26, H04Q 9/00, H04N 7/18, E02F 3/43, G08C 17/02

(54) **WORK ASSISTING SERVER AND METHOD FOR SELECTING IMAGING DEVICE**
ARBEITSHILFESERVER UND VERFAHREN ZUR AUSWAHL VON BILDGEBUNGSVORRICHTUNGEN
SERVEUR D'AIDE AU TRAVAIL ET PROCÉDÉ POUR SÉLECTIONNER UN DISPOSITIF D'IMAGERIE

(30) Priority: 25.12.2019 JP 2019234102
(43) Date of publication of application: 31.08.2022
(73) Proprietor: KOBELCO CONSTRUCTION MACHINERY CO., LTD., Hiroshima-shi, Hiroshima 731-5161 (JP)
(72) Inventor: SASAKI Hitoshi, Hiroshima-shi, Hiroshima 731-5161 (JP); SAIKI Seiji, Hiroshima-shi, Hiroshima 731-5161 (JP); YAMAZAKI Yoichiro, Hiroshima-shi, Hiroshima 731-5161 (JP)
(74) Representative: Schön, Christoph
(86) International application number: PCT/JP2020/032599
(87) International publication number: WO 2021/131161

(56) References cited:
- EP-A1- 2 511 677
- EP-A1- 3 385 458
- WO-A1-2016/170665
- WO-A1-2017/099070
- WO-A1-2019/012993
- WO-A1-2019/130973
- WO-A1-2019/212035
- JP-A- 2017 071 916
- JP-A- 2019 101 765
- US-A1- 2013 155 240
- US-A1- 2018 061 040

## Description

### Technical Field

The present invention relates to a work assisting system for remotely operating a work machine and a method for selecting an imaging device for imaging a work machine to assist a work.

### Background Art

In the related art, a plurality of fixed point cameras are placed in work sites where work machines perform works such that it is possible to overview the entire sites or to monitor a motion or a work of a specific shovel. Such devices are known from document US2018/061040A1.

For example, a construction site management system in Patent Literature 1 below comprises a plurality of imaging devices and an information presenting device. Each of the plurality of imaging devices is placed above each construction site to image the construction site in an overviewing manner. Also, all points in the construction site where attended driving vehicles can travel are imaged without being missed by at least one imaging device.

Also, the information presenting device can generate an entire overviewed image in which the entire construction site appears on the basis of images captured by the plurality of imaging devices and cause an in-vehicle terminal of a loading vehicle to display the entire overviewed image in which a carrying vehicle is depicted. Such an information presenting device is provided inside a building in the construction site, for example (Patent Literature 1/Paragraphs 0008 to 0010, FIG. 1).

### Citation List

### Patent Literature

Patent Literature 1: Japanese Patent Laid-Open No. 2019-151968

### Summary of Invention

### Technical Problem

An image (video) captured by the imaging devices and displayed on the information presenting device is useful for securing safety in the work site. However, since each work machine performs traveling, slewing, and the like and the motion changes every moment in practice, the work machine in the image is small or hardly appears, and the image may be difficult to use. In a case in which a work machine is manipulated through a remote operation, in particular, there is a high necessity for an operator to check the work machine and conditions in the surroundings thereof using the information presenting device.

The present invention was made in view of the aforementioned points, and an object thereof is to provide a work assisting system that provides assist such that an operator can reliably performs a work.

### Solution to Problem

The first invention is a work assisting system as defined in appended claim 1.

In the work assisting server of the work assisting system according to the present invention, the imaging device images the work machine. Also, once the captured image (a stationary image or a moving image) is sent to the display device, the operator can check the conditions. In this manner, the work assisting server assists the work performed by the operator using the work machine.

The first assisting process element extracts, as candidates, the imaging devices including the work machine in the imaging ranges from among the plurality of imaging devices and causes the extracted imaging devices to capture images of the work machine. Also, the second assisting process element selects an optimal imaging device including the work machine in the imaging range and causes the selected imaging device to output the captured image to the display device when the work machine moves. Therefore, the work assisting server can reliably assist the work using the work machine by allowing the operator to check the work machine or the conditions in the surroundings thereof without switching the imaging devices by the operator himself/herself.

The second invention is a work assisting system as defined in appended claim 5.

In the work assisting server of the work assisting system according to the present invention, the first assisting process element extracts, as candidates, the imaging devices including the work machine in the imaging ranges from the plurality of imaging devices and causes the extracted imaging devices to capture images (stationary images or moving images) of the work machine. Also, the third assisting process element selects the imaging device on the basis of the work content of the work machine and causes the selected imaging device to output the captured image to the display device. In this manner, according to the work assisting server, the operator can accurately recognize the work content of the work machine without switching the imaging devices by the operator himself/herself.

The third invention is a method for selecting an imaging device as defined in claim 7, which selects at least one of a plurality of imaging devices connected to a server, images a work of a work machine, and assists the work when an operator performs the work through a remote operation of the work machine while viewing a captured image displayed on a display device, the method comprising: a first step of extracting, as candidates, the imaging devices including the work machine in imaging ranges defined from preset viewing angles from among the plurality of imaging devices; and a second step of selecting the imaging device that is able to obtain the imaging range including an optimal direction or size of the work machine from the candidates and causing the selected imaging device to provide an output to the display device in a case in which the work machine is determined to have moved.

According to the method for selecting an imaging device of the present invention, once the imaging devices capture the image of the work machine, the captured images (stationary images or moving images) are sent to the display device via the server, and the operator can check the conditions.

According to the selecting method, the imaging devices including the work machine in the imaging ranges are extracted as the candidates from among the plurality of imaging devices (first step). Also, when the work machine moves, the imaging device including the work machine in the imaging range with the optimal direction or size (at an angle at which the work machine appears not too small and is clearly viewed, for example) is selected from among the candidates, and the selected imaging device is caused to output the captured image to the display device (Second step). In this manner, the operator can more reliably perform the work using the work machine without switching the imaging devices by the operator himself/herself.

The fourth invention is a method for selecting an imaging device as defined in claim 8, which selects at least one of a plurality of imaging devices connected to a server, images a work of a work machine, and assists the work when an operator performs the work through a remote operation of the work machine while viewing a captured image displayed on a display device, the method comprising: a first step of extracting, as candidates, the imaging devices including the work machine in imaging ranges defined from preset viewing angles from among the plurality of imaging devices; and a third step of selecting the imaging device that is able to obtain the optimal imaging range to enable recognition of work content of the work machine from among the candidates on the basis of the work content and causing the selected imaging device to provide an output to the display device.

According to the method for selecting an imaging device of the present invention, the imaging devices including the work machine in the imaging ranges are extracted as the candidates from among the imaging devices (first step). Also, the optimal imaging devices are selected from among the candidates on the basis of the work content of the work machine, and the selected imaging device is caused to output the captured image to the display device (third step). In this manner, the operator can accurately recognize the work content of the work machine without switching the imaging devices by the operator himself/herself.

### Brief Description of Drawings

FIG. 1 is a diagram for explaining an outline of a work assisting system according to an embodiment of the present invention.
FIG. 2 is a diagram for explaining a configuration of an operation mechanism of a work machine.
FIG. 3 is a diagram for explaining details of the work machine.
FIG. 4 is a flowchart of each process performed by a work assisting server and a remote operation device.
FIG. 5 is a bird's eye view of a work site seen from upper air (before the work machine is moved).
FIG. 6 is an example (1) of captured images displayed on an image output device.
FIG. 7 is a bird's eye view of the work site seen from the upper air (after the work machine is moved).
FIG. 8 is an example (2) of captured images displayed on the image output device.
FIG. 9 is an example (3) of a captured image displayed on the image output device.

### Description of Embodiments

Hereinafter, details of a work assisting system according to the present invention will be described with reference to the drawings.

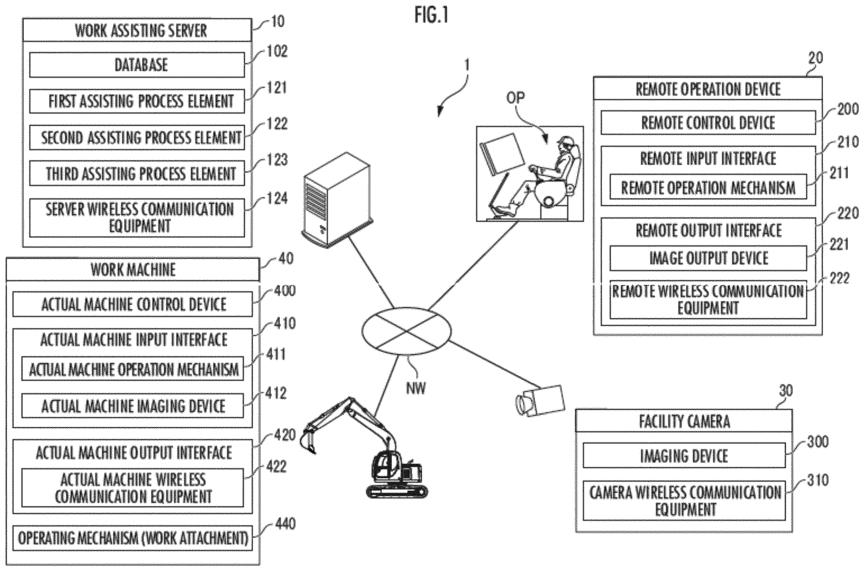

First, a work assisting server 10 and a work assisting system 1 including the same according to an embodiment of the present invention will be described with reference to FIG. 1. The work assisting system 1 is configured by the work assisting server 10, a remote operation device 20 for remotely operating a work machine 40, and a plurality of facility cameras 30 that are placed at predetermined positions in a work site to image the work machine 40, in addition to the work machine 40.

The work assisting server 10, the remote operation device 20, the facility camera 30, and the work machine 40 are configured to be able to communicate with each other through a network NW including a wireless communication network. The work assisting server 10 automatically selects an appropriate facility camera 30 in accordance with switching, moving, or work content of the work machine 40. Also, the work assisting server 10 outputs a captured image to an image output device 221, which will be described later, in order to assist an operation performed by an operator OP on the remote operation device 20.

The work assisting server 10 comprises a database 102, a first assisting process element 121, a second assisting process element 122, a third assisting process element 123, and server wireless communication equipment 124. The database 102 stores and holds captured images and the like captured by the facility cameras 30. The database 102 may be configured by a database server separated from the work assisting server 10.

The assisting process elements 121 to 123 are configured by arithmetic operation devices (single-core processors, multi-core processors, or processor cores configuring the same). Also, the assisting process elements 121 to 123 read necessary data and software from a storage device such as a memory and execute arithmetic operations in accordance with the software on the data as a target. Also, the server wireless communication equipment 124 provides a display instruction to the image output device 221 via the network NW and receives captured images from the facility cameras 30.

Next, the remote operation device 20 comprises a remote control device 200, a remote input interface 210, and a remote output interface 220. The remote control device 200 is configured by an arithmetic operation device (a single-core processor, a multi-core processor, or a processor core configuring the same). Also, the remote control device 200 reads necessary data and software from the storage device such as a memory and executes an arithmetic operation in accordance with the software on the data as a target.

The remote input interface 210 comprises a remote operation mechanism 211. Also, the remote output interface 220 comprises the image output device 221 and remote wireless communication equipment 222. The remote wireless communication equipment 222 transmits an operation signal to the work machine 40 via the network NW and receives captured images from the facility cameras 30.

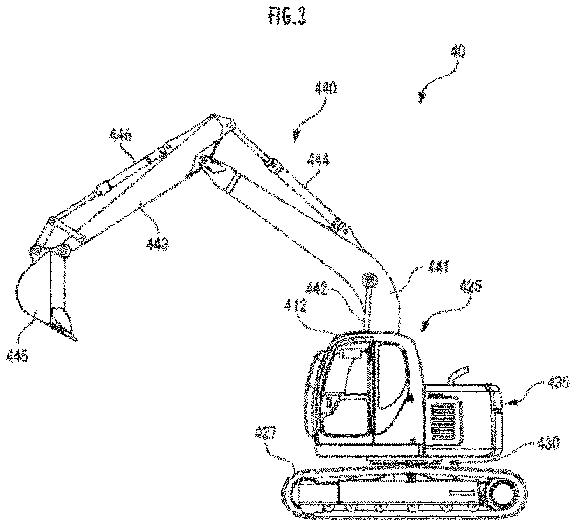

The remote operation mechanism 211 comprises a traveling operation device, a slewing operation device, a boom operation device, an arm operation device, and a bucket operation device. Each operation device has an operation lever that receives a turning operation. The operation lever (traveling lever) of the traveling operation device is operated to cause a lower traveling body 427 of the work machine 40 to operate (see FIG. 3). The traveling lever may also functions as a traveling pedal. For example, a traveling pedal fixed to a base portion or a lower end portion of the traveling lever may be provided.

The operation lever (slewing lever) of the slewing operation device is used to cause a hydraulic slewing motor configuring a slewing mechanism 430 of the work machine 40 to operate. Also, the operation lever (boom lever) of the boom operation device is used to cause a boom cylinder 442 of the work machine 40 to operate (see FIG. 3).

The operation lever (arm lever) of the arm operation device is used to cause an arm cylinder 444 of the work machine 40 to operate. The operation lever (bucket lever) of the bucket operation device is used to cause a bucket cylinder 446 of the work machine 40 to operate (see FIG. 3).

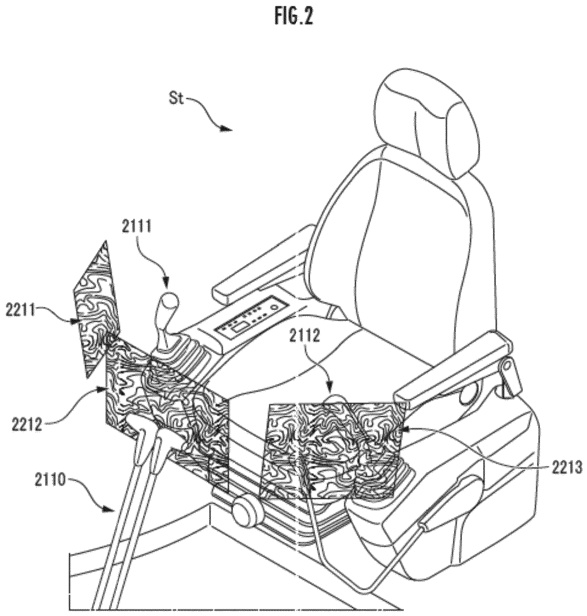

Here, FIG. 2 illustrates examples of each operation lever configuring the remote operation mechanism 211 and a seat St adapted to allow the operator OP to be seated therein. The seat St is in the form like a high-back chair with armrests. The seat St may be in any form in which the operator can be seated therein, such as a form like a low-back chair with no headrest or a form like a chair with no backrest.

A pair of left and right traveling levers 2110 in accordance with left and right crawlers are disposed side by side on the left and right sides in front of the seat St. One operation lever may function as a plurality of operation levers. For example, a right-side operation lever 2111 provided in front of a right-side frame of the seat St may function as the boom lever in a case in which it is operated in the front-back direction and function as the bucket lever in a case in which it is operated in the left-right direction.

Similarly, a left-side operation lever 2112 provided in front of a left-side frame of the seat St may function as the arm lever in a case in which it is operated in the front-back direction and function as the slewing lever in a case in which it is operated in the left-right direction. Also, the lever pattern may be arbitrarily changed in response to an operation instruction from the operator OP.

The image output device 221 (the "display device" in the present invention) configuring the remote output interface 220 is configured by a right obliquely front image output device 2211 disposed on a right obliquely front side of the seat St, a front image output device 2212 disposed in front thereof (on the front surface side), and a left obliquely front image output device 2213 disposed on the left obliquely front side. The image output devices 2211 to 2213 may further comprise speakers (sound output devices).

Returning to FIG. 1, the facility cameras 30 (the "imaging devices" in the present invention) include imaging devices 300 and camera wireless communication equipment 310. The imaging devices 300 have predetermined imaging ranges, and viewing angles that are movable in the up-down and left-right directions may be set. Also, the imaging devices 300 may constantly continue image capturing, or the imaging devices 300 may start image capturing in a case in which the facility cameras 30 are selected at the time of work in the work site.

The camera wireless communication equipment 310 transmits captured images captured by the imaging devices 300 to the server wireless communication equipment 124 of the work assisting server 10 and the remote wireless communication equipment 222 of the remote operation device 20 via the network NW. Although display switching instructions for the imaging devices 300 in regard to an imaging target, a direction, zooming-in, zooming-out, and the like are performed on the side of the work assisting server 10 while image analysis is performed, the instructions may be provided from the side of the operator OP.

The work machine 40 comprises an actual machine control device 400, an actual machine input interface 410, an actual machine output interface 420, and an operating mechanism (work attachment) 440. The actual machine control device 400 is configured by an arithmetic operation device (a single-core processor, a multi-core processor, or a processor core configuring the same). Also, the actual machine control device 400 reads necessary data and software from the storage device such as a memory and executes an arithmetic operation in accordance with the software on the data as a target.

Next, FIG. 3 illustrates an example of the work machine 40 according to the present embodiment. The work machine 40 is, for example, a crawler shovel (construction machine) and comprises a crawler-type lower traveling body 427 and an upper slewing body 435 mounted on the lower traveling body 427 such that it can slew via a slewing mechanism 430. A cab (driver's cab) 425 is provided at a front left portion of the upper slewing body 435. Also, the work attachment 440 as an operating mechanism is provided at a front center portion of the upper slewing body 435.

The actual machine input interface 410 comprises an actual machine operation mechanism 411 and an actual machine imaging device 412. The actual machine operation mechanism 411 comprises a plurality of operation levers disposed similarly to the remote operation mechanism 211 in the surroundings of the seat disposed inside the cab 425.

Also, actual machine wireless communication equipment 422 receives a signal in accordance with an operation form of a remote operation lever from the remote wireless communication equipment 222 of the remote operation device 20 via the network NW. The signal is further transmitted to the actual machine control device 400, and the work machine 40 operates in accordance with the signal. Note that a drive mechanism or a robot that causes an actual machine operation lever to operate on the basis of the signal is provided in the cap 425. Also, the actual machine imaging device 412 is placed inside the cap 425, for example, and images an environment including at least a part of the operating mechanism 440 through a front window of the cab 425.

The operating mechanism (work attachment) 440 comprises a boom 441 attached to the upper slewing body 435, an arm 443 coupled to the tip end portion of the boom 441 such that it can turn, and a bucket 445 coupled to the tip end portion of the arm 443 such that it can turn. The boom cylinder 442, the arm cylinder 444, and the bucket cylinder 446 configured by stretchable hydraulic cylinders are attached to the work attachment 440.

The boom cylinder 442 is interposed between the boom 441 and the upper slewing body 435 such that it stretches and contracts in response to supply of a hydraulic oil and causes the boom 441 to turn in a hoisting direction. The arm cylinder 444 is interposed between the arm 443 and the boom 441 such that it stretches and contracts in response to supply of a hydraulic oil and causes the arm 443 to turn around a horizontal axis relative to the boom 441.

The bucket cylinder 446 is interposed between the bucket 445 and the arm 443 such that it stretches and contracts in response to supply of a hydraulic oil and causes the bucket 445 to turn around a horizontal axis relative to the arm 443.

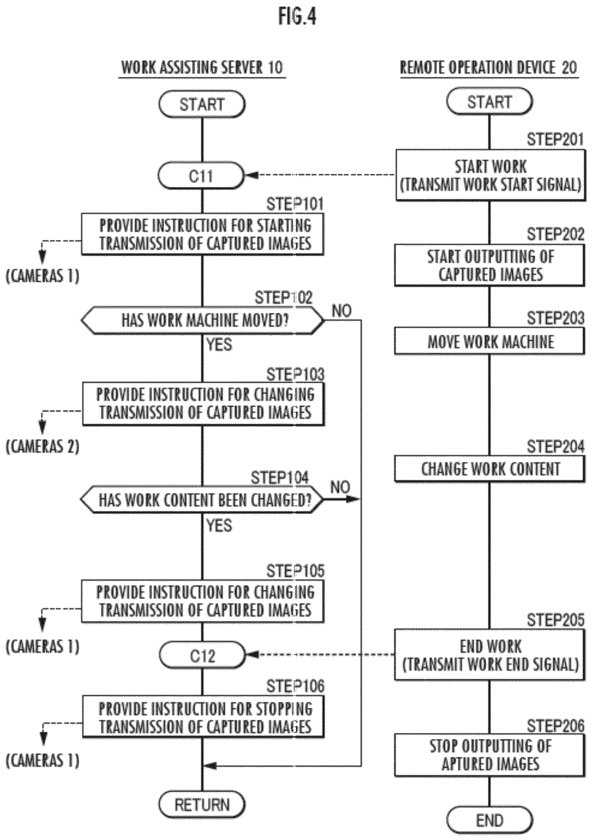

Next, a flowchart related to functions of the work assisting system 1 according to the present embodiment will be described with reference to FIG. 4. Appropriately referring to FIG.s 5 to 8, switching of the facility cameras 30, display of a captured image, and the like will be described.

Note that the blocks "C11" and "C12" in the flowchart are used to simplify the description, and these mean transmission and/or reception of data and mean that processing in a branched direction is executed with the transmission and/or the reception of the data as a condition.

First, the operator OP starts, on the remote operation device 20, a work using the work machine 40 (STEP201). At this time, a "work start signal" is transmitted to the work assisting server 10.

Next, the work assisting server 10 receives the work start signal (C11) and provides an instruction for starting transmission of a captured image (STEP101). Here, a camera 1 (a facility camera 30a, which will be described later, for example) placed at a predetermined position in a work site and including the work machine 40 in an imaging range thereof is selected.

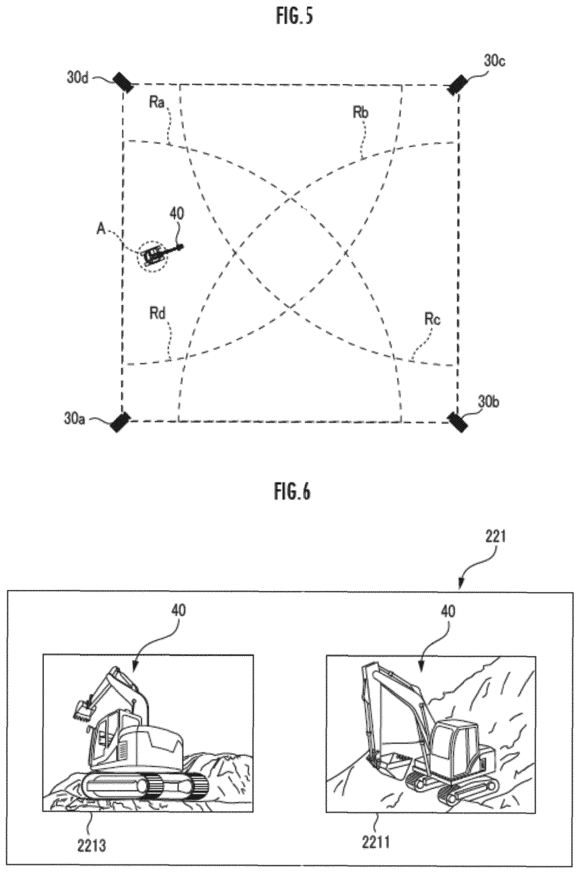

Here, FIG. 5 illustrates a bird's eye view of the work site seen from the upper air. Four facility cameras 30a to 30d are placed at separated locations in the work site. Also, the fan-shaped regions Ra to Rd illustrated by the dashed lines are regions that can be imaged by the four facility cameras 30a to 30d, respectively. Note that a plurality of facility cameras 30 other than the facility cameras 30a to 30d may be present.

In a case in which the work machine 40 is present at the position A, for example, the working assisting server 10 (first assisting process element 121) extracts the facility cameras 30a to 30d as candidates with high probabilities at which the work machine 40 is included in their imaging ranges defined from preset viewing angles since the work machine 40 is present in the work site. Then, the facility cameras 30a and 30d are selected since the position A is included only in the imaging ranges of the facility cameras 30a and 30d.

Next, the remote operation device 20 starts to output captured images (STEP202). In this manner, the operator OP can check the work machine 40 or conditions in the surroundings thereof through the image output device 221. Note that the camera 1 transmits the captured images to the work assisting server 10 as well in addition to the remote operation device 20.

FIG. 6 illustrates an example of captured images of the facility cameras 30a and 30d displayed on the image output device 221 of the remote operation device 20. As illustrated in the drawing, a first image of the work machine 40 and a third image of the work machine 40 are displayed on the right obliquely front image output device 2211 and the left obliquely front image output device 2213, respectively. As the first image and the third image, images selected through an operation of the operator OP are displayed, or appropriate images are selected and displayed in accordance with work content.

In this manner, the image output device 221 is caused to display the images captured by the facility cameras 30a and 30d with the imaging ranges defined from the present viewing angles in which the work machine 40 appears. In this manner, the image output device 221 can display the captured images at different angles. For example, an image from the left side and an image from the right side of the work machine 40 are acquired and displayed on the image output device 221. **In** this manner, the operator can accurately recognize the relative position of the work machine 40. Note that the first image and the third image displayed on the image output device 221 may be displayed on the basis of the direction of the work machine 40.

The facility cameras 30 images the work machine 40 that is working from a plurality of viewpoints, such as a back surface side and a side surface side. The facility cameras 30 may capture a zoomed-in image that enlarges a predetermined location, such as a work attachment 440 of the work machine 40, a zoomed-out image including conditions in the surroundings, and the like.

Next, it is assumed that the operator OP has moved the work machine 40 through the remote operation device 20 (STEP203). "Movement" described here means that the work machine 40 is caused to move by a predetermined distance (10 meters, for example) or more from the position A (initial position) in FIG. 5 as a start point and a work location is changed. Note that in a case in which the amount of movement of the work machine 40 is less than the predetermined distance, it is possible to regard the work machine 40 as having hardly moved. In that case, candidates of the facility cameras 30 for the display on the image output device 221 are not changed.

Next, the work assisting server 10 determines whether or not the work machine 40 has moved (STEP102). Here, the second assisting process element 122 of the work assisting server 10 determines the movement of the work machine 40 on the basis of at least one of the position of the work machine 40 in the images and the size of the work machine 40 included in the imaging regions using the transmitted captured images.

In a case in which the work machine 40 moves in the depth direction in at least one of the captured images of the facility cameras 30a to 30d, the size of the image of the work machine 40 included in the imaging region changes. The distances between the facility cameras 30 and the work machine 40 correspond to the sizes of the images of the work machine 40 included in the imaging regions. Therefore, the actual movement amount that is the amount of actual movement of the work machine 40 is specified on the basis of the amount of change in size of the work machine 40 included in the imaging regions. Also, the second assisting process element 122 can determine whether or not the work machine 40 has moved by the predetermined distance or more by determining whether or not the specified actual movement amount is equal to or greater than the predetermined distance.

Also, in a case in which the work machine 40 moves in the left-right direction in at least one of the captured images of the facility cameras 30a to 30d, the position (an image center, for example) of the image of the work machine 40 changes. There is a correspondence that the amount of apparent change in position of the image of the work machine 40 in the imaging regions of the facility cameras 30 increases relative to the amount of movement of the work machine 40 in a case in which the work machine 40 is close to the facility camera 30 (the size of the image of the work machine 40 is large) as compared with a case in which the work machine 40 is far from the facility camera 30 (the size of the image of the work machine 40 is small). Therefore, the actual movement amount that is the amount of actual movement of the work machine 40 is specified on the basis of the size of the work machine 40 included in the imaging regions and the amount of change in position of the image of the work machine 40. The second assisting process element 122 can determine whether or not the work machine 40 has moved by the predetermined distance or more by determining whether or not the specified actual movement amount is equal to or greater than the predetermined distance.

Also, in a case in which the work machine 40 moves in the lateral direction and the depth direction in the captured images, the distances between the facility cameras 30 and the work machine 40 are specified on the basis of both the positions of the image of the work machine 40 and the sizes of the work machine 40. Note that in consideration of the fact that the apparent position and size of the work machine 40 change in accordance with the change in direction of the work machine 40, the direction of the work machine 40 may be added as an element for determining the movement of the work machine 40. The direction of the work machine 40 is determined from a change in shape of the work machine 40 included in the captured images, for example.

The process proceeds to STEP103 in a case in which the work machine 40 is determined to have moved, or the series of processes of the work assisting server 10 are ended in a case in which the work machine 40 is determined not to have moved.

In a case in which the work machine 40 is determined to have moved ("YES" in STEP102), an instruction for changing transmission of captured images is provided (STEP103). Here, cameras 2 including the work machine 40 after the movement in the imaging ranges are extracted in accordance with the movement of the work machine 40.

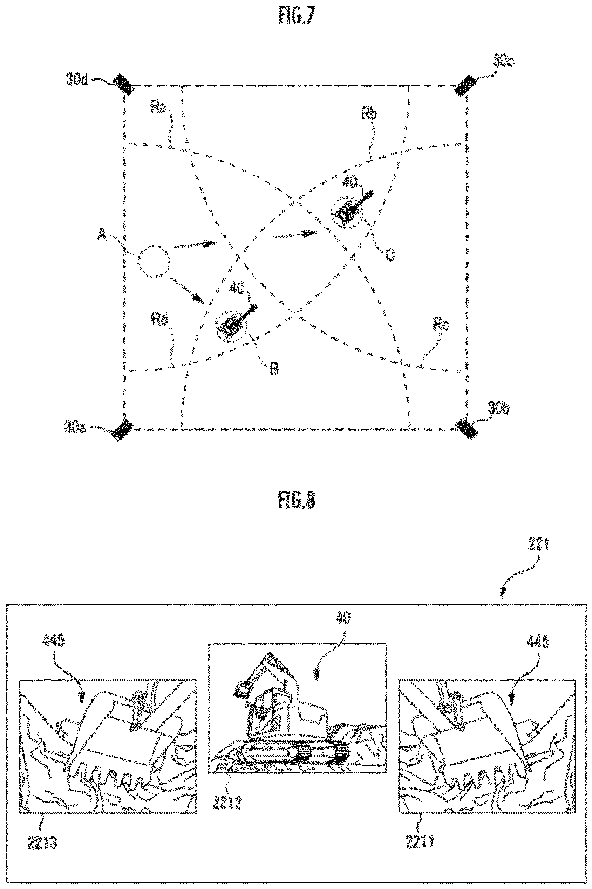

Here, FIG. 7 illustrates a bird's eye view of the work site in a case in which the work machine 40 has moved. First, it is assumed that the work machine 40 has moved from the position A to the position B. At this time, the facility cameras 30a, 30b, and 30d are extracted as the cameras 2 with the imaging ranges defined from the present viewing angles in which the work machine 40 appears. Also, a first image of the work machine 40, a second image of the work machine 40, and a third image of the work machine 40 are selected and displayed on the right obliquely front image output device 2211, the front image output device 2212, and the left obliquely front image output device 2213, respectively.

Also, in a case in which the work machine 40 has moved from the position A to the position C, the facility cameras 30b, 30c, and 30d are extracted as the cameras 2 with the imaging ranges in which the work machine 40 appears. According to the work assisting system 1, the facility cameras 30 that are close to the work machine 40 after the movement are extracted and selected with priority in this manner, and it is possible for the operator OP to continue the operation of the work machine 40 while viewing the image output device 221 without switching the facility cameras by the operator OP himself/herself. Also, when the operator OP performs an operation of switching the facility cameras 30, the operator OP can perform the selection in a state where the facility cameras 30 in which the work machine 40 appears have been extracted.

For the captured images displayed on the image output devices 2211 to 2213, each zoom level may be changed depending on an operation of the operator OP or work content. In this manner, the operator OP can acquire information regarding conditions of the work using the work machine 40, whether there are other machines or operators in the surroundings of the work machine 40, and the like.

Next, it is assumed that the operator OP has changed, on the remote operation device 20, work content using the work machine 40 (STEP204). The "change in work content" described here means a significant change in work content such as a change from a traveling operation to leveling construction or slope construction, for example.

Next, the work assisting server 10 determines whether or not the work content of the work machine 40 has been changed (STEP104). Here, the third assisting process element 123 of the work assisting server 10 determines a change in work content using transmitted captured images. For example, since movement of the work machine 40 is detected at the time of the traveling operation and the movement of the work machine 40 is not detected when the work machine 40 arrives at a location where the work is performed, the work content is determined to have been changed. Moreover, determination conditions, such as a condition that an operation of selecting work content has been performed by the operator OP or a condition that work content has been changed by specifying a change in content of an operation, may be added.

The process proceeds to STEP105 in a case in which the work content is determined to have been changed, or the series of processes of the work assisting server 10 are ended in a case in which the work content is determined not to have been changed.

In a case in which the work content is determined to have been changed ("YES" in STEP104), the instruction for changing transmission of captured image is provided again (STEP105). Here, cameras 1 from which the bucket 445 and the like of the work machine 40 can be easily and visually recognized in the imaging ranges are selected in accordance with the change in work content.

When the work machine 40 is performing an ordinary work (such as scraping soils and moving them to a dump truck), the work assisting server 10 (third assisting process element 123) displays the captured image of the work machine 40 on the front surface side or the side surface side in a zoomed-in manner on the image output device 221.

Also, in a case of slope (an artificial oblique surface created by embankment or the like) formation construction, a motion of a tip portion of the work attachment 440 of the work machine 40 is important, and a zoomed-in captured image of the bucket 445, for example, is thus displayed on the image output device 221.

Here, FIG. 8 illustrates an example of captured images of the work machine 40 during a work displayed on the image output device 221 of the remote operation device 20.

A zoomed-in image (one direction) of the bucket 445 of the work machine 40 as a first image, an image of the work machine 40 on the back surface side as a second image, and a zoomed-in image (the other direction) of the bucket 445 of the work machine 40 as a third image are displayed on the right obliquely front image output device 2211, the front image output device 2212, and the left obliquely front image output device 2213, respectively.

In this manner, the operator OP can move on the work while viewing and checking the zoomed-in image of the bucket 445. In a case in which the direction of the work machine 40 is changed, and it becomes not possible to image the conditions of the bucket 445, the third assisting process element 123 may switch the facility cameras 30 to other facility cameras 30.

In addition, in a case of leveling construction, it is desirable that the third assisting process element 123 display a zoomed-out image of the work machine 40 captured from the upper air side on the image output device 221. Also, the operator OP can recognize the conditions in the surroundings of the work machine 40 by the third assisting process element 123 displaying a captured image of the work machine 40 on a side surface side or a zoomed-out captured image on the side surface side during movement of the work machine 40. The third assisting process element 123 may display a line segment representing the distance in a superimposed manner in the traveling direction during the movement of the work machine 40.

Thereafter, the operator OP ends the work using the work machine 40 on the work assisting server 10 (STEP205). At this time, a "work end signal" is transmitted to the work assisting server 10.

Next, the work assisting server 10 receives the work end signal (C12) and provides an instruction for stopping transmission of captured images (STEP106). The work assisting server 10 may provide the instruction for stopping transmission not only to the cameras 1 that are currently transmitting captured images but also to all the cameras in the work site. A series of processes of the work assisting server 10 are now ended.

Finally, the remote operation device 20 stops outputting of the captured images (STEP206). In this manner, the display of the captured images on the image output device 221 is ended. A series of processes of the remote operation device 20 are now ended.

Although the movement of the work machine 40 is performed prior to a change in work content of the work machine 40 in the above description, this is just an example. A change in work content may be performed earlier, and in that case, the work assisting server 10 appropriately switches the cameras 1 and the cameras 2.

The work machine 40 has a release lever for releasing a safety state, and an image in which it is possible to recognize the entire work site or the distance between the work machine 40 and the operator may be displayed on the image output device 221 when the release lever is off (work unavailable state).

Also, when the release lever of the work machine 40 is on (work available state), the captured images (angles, sizes, and the like) are switched in accordance with work content, and it is a matter of course that imaging may be continued using one facility camera in a case in which it is not necessary to switch the facility cameras.

The case in which the first image of the work machine 40, the second image of the work machine 40, and the third image of the work machine 40 are displayed on the right obliquely front image output device 2211, the front image output device 2212, and the left obliquely front image output device 2213, respectively, as the captured images displayed on the image output device 221 of the remote operation device 20 as illustrated in FIG.s 6 and 8 has been exemplified in the above description.

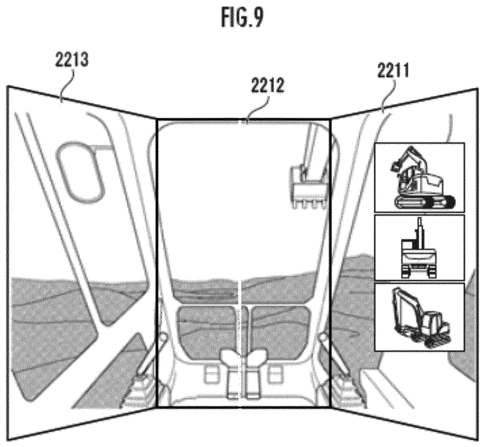

As illustrated in FIG. 9, a right side of an image captured by the actual machine imaging device 412 may be displayed on the right obliquely front image output device 2211, an image captured by the actual machine imaging device 412 except for both left and right end sides may be displayed on the front image output device 2212, and the left side of the image captured by the actual machine imaging device 412 may be displayed on the left obliquely front image output device 2213. Moreover, the first image, the second image, and the third image may be displayed on the right obliquely front image output device 2211.

Also, each of the first image, the second image, and the third image may be displayed on at least one or more of the front image output devices, namely the right obliquely front image output device 2211, the front image output device 2212, and the left obliquely front image output device 2213.

Since the above description has employed the form in which the work assisting server 10 selects the facility cameras 30, the case in which the captured images displayed on the image output device 221 of the remote operation device 20 are images captured by the facility cameras 30 has been described. However, the imaging devices selected by the work assisting server 10 are not limited to the facility cameras 30. In a case in which other work machines are present in the surrounding region of the work machine 40, the work assisting server 10 may be able to select captured images captured by imaging devices mounted in other work machines in addition to the facility cameras 30.

In the work assisting server according to the first invention, the second assisting process element preferably determines movement of the work machine on the basis of at least one of the position and the size of the work machine included in captured images captured by the imaging devices.

With this configuration, the second assisting process element determines that the work machine has moved in a case in which the position of the work machine included in the captured images has changed or the size has changed. The work assisting server can recognize movement of the work machine on the basis of such a change in images and reliably switch the imaging devices.

Also, in the work assisting server according to the first invention, the second assisting process element preferably selects the imaging devices that are able to image a side surface image or a zoomed-out image of a side surface of the work machine during movement of the work machine.

The second assisting process element selects the imaging device to capture a side surface image of the work machine, for example, during movement of the work machine. In this manner, the operator can check the conditions in the surroundings of the work machine and the relative position and reliably cause the work machine to move.

Also, in the work assisting server according to the first invention, the display device preferably displays two or more captured images of the work machine in different directions.

Since the imaging devices have predetermined viewing angles, it is possible to display a plurality of images at different angles. The display device acquires a captured image of the work machine from the left side and a captured image from the right side using the imaging devices, for example, and the acquired captured images are displayed on the display device. In this manner, the operator can accurately recognize the relative position and the like of the work machine.

Also, in the work assisting server according to the second invention, the third assisting process element preferably selects the imaging device that can capture a front surface image or a side surface image of the work machine or a zoomed-in image of the tip attachment in a case in which the work machine is working.

The third assisting process element captures a zoomed-in image of the tip attachment, for example, in a case in which the work machine is working. In this manner, the operator can reliably recognize work conditions of the work machine.

### Reference Signs List

- 1: Work assisting system
- 10: Work assisting server
- 20: Remote operation device
- 30: Facility camera
- 40: Work machine
- 102: Database
- 121: First assisting process element
- 122: Second assisting process element
- 123: Third assisting process element,
- 124: Server wireless communication equipment
- 200: Remote control device
- 210: Remote input interface
- 220: Remote output interface
- 221: Image output device
- 222: Remote wireless communication equipment
- 300: Imaging device
- 310: Camera wireless communication equipment
- 400: Actual machine control device
- 410: Actual machine input interface
- 412: Actual machine imaging device
- 420: Actual machine output interface
- 425: Cab
- 427: Lower traveling body
- 430: Slewing mechanism
- 435: Upper slewing body
- 440: Operating mechanism (work attachment)
- 441: Boom
- 443: Arm
- 445: Bucket
- 2110: Traveling lever
- 2111: Right-side operation lever
- 2112: Left-side operation lever

## Claims

1. A work assisting system (1) comprising a work machine (40), a remote operation device (20) for remotely operating the work machine (40), said remote operation device (20) comprising a display device (221), a plurality of imaging devices (30) comprising imaging devices (30) that are placed at predetermined positions in a work site to image the work machine (40), and a work assisting server (10) which communicates with the plurality of imaging devices (30) and assists a work of the work machine (40) when an operator remotely operates the work machine (40) while viewing a captured image displayed on a display device (221), the work assisting server (10) comprising:
a first assisting process element (121) which extracts, as candidates, the imaging devices (30) including the work machine (40) in imaging ranges defined from preset viewing angles from among the plurality of imaging devices (30); and
a second assisting process element (122) which selects the imaging device (30) that is able to obtain the imaging range including an optimal direction or size of the work machine (40) based on movement of the work machine (40) from among the candidates and causes the selected imaging device (30) to provide an output to the display device (221).

2. The work assisting system (1) according to claim 1, wherein the second assisting process element (122) determines the movement of the work machine (40) based on at least one of a position and a size of the work machine (40) included in the captured image captured by the imaging device (30).

3. The work assisting system (1) according to claim 1 or 2, wherein the second assisting process element (122) selects the imaging device (30) that is able to capture a side surface image or a zoomed-out image of a side surface of the work machine (40) during the movement of the work machine (40).

4. The work assisting system (1) according to any one of claims 1 to 3, wherein the display device (221) displays two or more captured images of the work machine (40) in different directions.

5. A work assisting system (1) comprising a work machine (40), a remote operation device (20) for remotely operating the work machine (40), said remote operation device (20) comprising a display device (221), a plurality of imaging devices (30) comprising imaging devices (30) that are placed at predetermined positions in a work site to image the work machine (40), and a work assisting server (10) which communicates with the plurality of imaging devices (30) and assists a work of the work machine (40) when an operator remotely operates the work machine (40) while viewing a captured image displayed on the display device (221), the work assisting server (10) comprising:
a first assisting process element (121) which extracts, as candidates, the imaging devices (30) including the work machine (40) in imaging ranges defined from preset viewing angles from among the plurality of imaging devices (30); and
a third assisting process element (123) which selects the imaging device (30) that is able to obtain an optimal imaging range to enable recognition of work content of the work machine (40) based on the work content and causes the selected imaging device (30) to provide an output to the display device (221).

6. The work assisting system (1) according to claim 5, wherein the third assisting process element (123) selects the imaging device (30) that is able to capture a front surface image or a side surface image of the work machine (40) or a zoomed-in image of a tip attachment (440) in a case in which the work machine (40) is working.

7. A method for selecting an imaging device (30) which selects at least one of a plurality of imaging devices (30) connected to a server (10), said imaging devices (30) comprising imaging devices (30) that are placed at predetermined positions in a work site, images a work of a work machine (40), and assists the work when an operator performs the work through a remote operation of the work machine (40) by using a remote operation device (20) having a display device (221), while viewing a captured image displayed on the display device (221), the method comprising:
a first step of extracting, as candidates, the imaging devices (30) including the work machine (40) in imaging ranges defined from preset viewing angles from among the plurality of imaging devices (30); and
a second step of selecting the imaging device (30) that is able to obtain the imaging range including an optimal direction or size of the work machine (40) from the candidates and causing the selected imaging device (30) to provide an output to the display device (221) in a case in which the work machine (40) is determined to have moved.

8. A method for selecting an imaging device (30) which selects at least one of a plurality of imaging devices (30) connected to a server (10), said imaging devices (30) comprising imaging devices (30) that are placed at predetermined positions in a work site, images a work of a work machine (40), and assists the work when an operator performs the work through a remote operation of the work machine (40) by using a remote operation device (20) having a display device (221), while viewing a captured image displayed on the display device (221), the method comprising:
A first step of extracting, as candidates, the imaging devices (30) including the work machine (40) in imaging ranges defined from preset viewing angles from among the plurality of imaging devices (30); and
a further step of selecting the imaging device (30) that is able to obtain an optimal imaging range to enable recognition of work content of the work machine (40) from among the candidates based on the work content and causing the selected imaging device (30) to provide an output to the display device (221).

## Patentansprüche

1. Arbeitsunterstützungssystem (1), umfassend:
eine Arbeitsmaschine (40),
eine Fernbedienungsvorrichtung (20) zur Fernsteuerung der Arbeitsmaschine (40), wobei die Fernbedienungsvorrichtung (20) ein Anzeigegerät (221) umfasst,
eine Vielzahl von Bildaufnahmevorrichtungen (30), die Bildaufnahmevorrichtungen (30) umfassen, die an vorgegebenen Positionen an einer Arbeitsstelle angeordnet sind, um die Arbeitsmaschine (40) aufzunehmen, und
einen Arbeitsunterstützungsserver (10), der mit der Vielzahl von Bildaufnahmevorrichtungen (30) kommuniziert und eine Arbeit der Arbeitsmaschine (40) unterstützt, wenn ein Bediener die Arbeitsmaschine (40) fernsteuert, während er ein aufgenommenes Bild betrachtet, das auf dem Anzeigegerät (221) angezeigt wird,
wobei der Arbeitsunterstützungsserver (10) Folgendes umfasst:
ein erstes Unterstützungsverarbeitungselement (121), das aus der Vielzahl von Bildaufnahmevorrichtungen (30) diejenigen Bildaufnahmevorrichtungen als Kandidaten extrahiert, die die Arbeitsmaschine (40) in Aufnahmebereichen enthalten, die durch voreingestellte Blickwinkel definiert sind; und
ein zweites Unterstützungsverarbeitungselement (122), das die Bildaufnahmevorrichtung (30) auswählt, die in der Lage ist, den Aufnahmebereich einschließlich einer optimalen Richtung oder Größe der Arbeitsmaschine (40) basierend auf der Bewegung der Arbeitsmaschine (40) aus den Kandidaten zu erfassen, und die ausgewählte Bildaufnahmevorrichtung (30) veranlasst, eine Ausgabe an das Anzeigegerät (221) bereitzustellen.

2. Arbeitsunterstützungssystem (1) gemäß Anspruch 1, wobei das zweite Unterstützungsverarbeitungselement (122) die Bewegung der Arbeitsmaschine (40) basierend auf zumindest eines (Parameters) von Position und Größe der Arbeitsmaschine (40), die im aufgenommenen Bild, das von der Bildaufnahmevorrichtung (30) aufgenommen wurde, enthalten ist, bestimmt.

3. Arbeitsunterstützungssystem (1) gemäß Anspruch 1 oder Anspruch 2, wobei das zweite Unterstützungsverarbeitungselement (122) die Bildaufnahmevorrichtung (30) auswählt, die in der Lage ist, ein Seitenansichtsbild oder ein herausgezoomtes Bild einer Seitenansicht der Arbeitsmaschine (40) während der Bewegung der Arbeitsmaschine (40) aufzunehmen.

4. Arbeitsunterstützungssystem (1) gemäß einem der Ansprüche 1 bis 3, wobei das Anzeigegerät (221) zwei oder mehr aufgenommene Bilder der Arbeitsmaschine (40) in unterschiedlichen Richtungen anzeigt.

5. Arbeitsunterstützungssystem (1), das Folgendes umfasst:
eine Arbeitsmaschine (40),
eine Fernbedienungsvorrichtung (20) zur Fernsteuerung der Arbeitsmaschine (40), wobei die Fernbedienungsvorrichtung (20) ein Anzeigegerät (221) umfasst,
eine Vielzahl von Bildaufnahmevorrichtungen (30), die Bildaufnahmevorrichtungen (30) umfassen, die an vorgegebenen Positionen an einer Arbeitsstelle angeordnet sind, um die Arbeitsmaschine (40) aufzunehmen, und
einen Arbeitsunterstützungsserver (10), der mit der Vielzahl von Bildaufnahmevorrichtungen (30) kommuniziert und eine Arbeit der Arbeitsmaschine (40) unterstützt, wenn ein Bediener die Arbeitsmaschine (40) fernsteuert, während er ein aufgenommenes Bild betrachtet, das auf dem Anzeigegerät (221) angezeigt wird,
wobei der Arbeitsunterstützungsserver (10) Folgendes umfasst:
ein erstes Unterstützungsverarbeitungselement (121), das aus der Vielzahl von Bildaufnahmevorrichtungen (30) diejenigen Bildaufnahmevorrichtungen (30) als Kandidaten extrahiert, die die Arbeitsmaschine (40) in Aufnahmebereichen enthalten, die durch voreingestellte Blickwinkel definiert sind; und
ein drittes Unterstützungsverarbeitungselement (123), das die Bildaufnahmevorrichtung (30) auswählt, die in der Lage ist, einen optimalen Aufnahmebereich zu erfassen, um den Arbeitsinhalt der Arbeitsmaschine (40) basierend auf dem Arbeitsinhalt zu erkennen, und die ausgewählte Bildaufnahmevorrichtung (30) veranlasst, eine Ausgabe an das Anzeigegerät (221) bereitzustellen.

6. Arbeitsunterstützungssystem (1) gemäß Anspruch 5,
wobei das dritte Unterstützungsverarbeitungselement (123) die Bildaufnahmevorrichtung (30) auswählt, die in der Lage ist, ein Vorderansichtsbild oder ein Seitenansichtsbild der Arbeitsmaschine (40) oder ein herangezoomtes Bild eines Aufbaugeräts (440), für den Fall, dass die Arbeitsmaschine (40) arbeitet, aufzunehmen.

7. Verfahren zum Auswählen einer Bildaufnahmevorrichtung (30), welches mindestens eine von mehreren Bildaufnahmevorrichtungen (30), die mit einem Server (10) verbunden sind, wobei die Bildaufnahmevorrichtungen (30) Bildaufnahmevorrichtungen (30) umfassen, die an vorgegebenen Positionen an einer Arbeitsstelle angeordnet sind, auswählt, eine Arbeit einer Arbeitsmaschine (40) aufnimmt, und die Arbeit, wenn ein Bediener eine Arbeit durch Fernbedienung der Arbeitsmaschine (40) unter Verwendung einer Fernbedienungsvorrichtung (20), die ein Anzeigegerät (221) aufweist, ausführt, während er ein auf dem Anzeigegerät (221) angezeigtes aufgenommenes Bild betrachtet, unterstützt, wobei das Verfahren Folgendes umfasst:
einen ersten Schritt des Extrahierens aus der Vielzahl von Bildaufnahmevorrichtungen (30) derjenigen Bildaufnahmevorrichtungen (30) als Kandidaten, die die Arbeitsmaschine (40) in Aufnahmebereichen enthalten, die durch voreingestellte Blickwinkel definiert sind; und
einen zweiten Schritt des Auswählens derjenigen Bildaufnahmevorrichtung (30), die in der Lage ist, den Aufnahmebereich, der eine optimale Richtung oder Größe der Arbeitsmaschine (40) umfasst, von den Kandidaten zu erhalten, und des Veranlassens der ausgewählten Bildaufnahmevorrichtung (30), eine Ausgabe an das Anzeigegerät (221) bereitzustellen, falls festgestellt wird, dass sich die Arbeitsmaschine (40) bewegt hat.

8. Verfahren zum Auswählen einer Bildaufnahmevorrichtung (30), welches mindestens eine von mehreren Bildaufnahmevorrichtungen (30), die mit einem Server (10) verbunden sind, wobei die Bildaufnahmevorrichtungen (30) Bildaufnahmevorrichtungen (30) umfassen, die an vorgegebenen Positionen an einer Arbeitsstelle angeordnet sind, auswählt, eine Arbeit einer Arbeitsmaschine (40) aufnimmt, und die Arbeit, wenn ein Bediener die Arbeit durch Fernbedienung der Arbeitsmaschine (40) unter Verwendung einer Fernbedienungsvorrichtung (20), die ein Anzeigegerät (221) aufweist, ausführt, während er ein auf dem Anzeigegerät (221) angezeigtes aufgenommenes Bild betrachtet, unterstützt, wobei das Verfahren Folgendes umfasst:
einen ersten Schritt des Extrahierens aus der Vielzahl von Bildaufnahmevorrichtungen (30) derjenigen Bildaufnahmevorrichtungen (30) als Kandidaten, die die Arbeitsmaschine (40) in Aufnahmebereichen enthalten, die durch voreingestellte Blickwinkel definiert sind; und
einen weiteren Schritt des Auswählens der Bildaufnahmevorrichtung (30) aus den Kandidaten, die in der Lage ist, einen optimalen Bildaufnahmebereich zu erfassen, um den Arbeitsinhalt der Arbeitsmaschine (40) basierend auf dem Arbeitsinhalt zu erkennen, und des Veranlassens der ausgewählten Bildaufnahmevorrichtung (30), eine Ausgabe an das Anzeigegerät (221) bereitzustellen.

## Revendications

1. Système d' assistance au travail (1) comprenant une machine de travail (40), un dispositif de commande à distance (20) pour commander à distance la machine de travail (40), ledit dispositif de commande à distance (20) comprenant un dispositif d'affichage (221), une pluralité de dispositifs d'imagerie (30) comprenant des dispositifs d'imagerie (30) placés à des positions prédéterminées sur un chantier pour imager la machine de travail (40), et un serveur d'assistance au travail (10) communiquant avec la pluralité de dispositifs d'imagerie (30) et assistant un travail de la machine de travail (40) lorsqu'un opérateur actionne la machine de travail (40) à distance tout en visualisant une image capturée affichée sur un dispositif d'affichage (221), le serveur d'assistance au travail (10) comprenant :
un premier élément de processus d'assistance (121), lequel extrait, comme candidats, les dispositifs d'imagerie (30) incluant la machine de travail (40) dans des plages d'imagerie définies selon des angles de vue préréglés parmi la pluralité de dispositifs d'imagerie (30) ; et
un deuxième élément de processus d'assistance (122), lequel sélectionne le dispositif d'imagerie (30) capable d'obtenir la plage d'imagerie incluant une direction ou taille optimale de la machine de travail (40) sur la base du déplacement de la machine de travail (40) parmi les candidats et amène le dispositif d'imagerie (30) sélectionné à fournir une sortie au dispositif d'affichage (221).

2. Système d' assistance au travail (1) selon la revendication 1, dans lequel le deuxième élément de processus d'assistance (122) détermine le déplacement de la machine de travail (40) sur la base de l'une au moins parmi une position et une taille de la machine de travail (40) incluse dans l'image capturée par le dispositif d'imagerie (30).

3. Système d' assistance au travail (1) selon la revendication 1 ou 2, dans lequel le deuxième élément de processus d'assistance (122) sélectionne le dispositif d'imagerie (30) capable de capturer une image de surface latérale ou une image dézoomée d'une surface latérale de la machine de travail (40) pendant le déplacement de la machine de travail (40).

4. Système d' assistance au travail (1) selon l'une quelconque des revendications 1 à 3, dans lequel le dispositif d'affichage (221) affiche deux images capturées ou plus de la machine de travail (40) dans différentes directions.

5. Système d' assistance au travail (1) comprenant une machine de travail (40), un dispositif de commande à distance (20) pour commander à distance la machine de travail (40), ledit dispositif de commande à distance (20) comprenant un dispositif d'affichage (221), une pluralité de dispositifs d'imagerie (30) comprenant des dispositifs d'imagerie (30) placés à des positions prédéterminées sur un chantier pour imager la machine de travail (40), et un serveur d'assistance au travail (10) communiquant avec la pluralité de dispositifs d'imagerie (30) et assistant un travail de la machine de travail (40) lorsqu'un opérateur actionne la machine de travail (40) à distance tout en visualisant une image capturée affichée sur le dispositif d'affichage (221), le serveur d'assistance au travail (10) comprenant :
un premier élément de processus d'assistance (121), lequel extrait, comme candidats, les dispositifs d'imagerie (30) incluant la machine de travail (40) dans des plages d'imagerie définies selon des angles de vue préréglés parmi la pluralité de dispositifs d'imagerie (30) ; et
un troisième élément de processus d'assistance (123), lequel sélectionne le dispositif d'imagerie (30) capable d'obtenir une plage d'imagerie optimale pour permettre la reconnaissance d'un contenu de travail de la machine de travail (40) sur la base du contenu de travail et amène le dispositif d'imagerie (30) sélectionné à fournir une sortie au dispositif d'affichage (221).

6. Système d' assistance au travail (1) selon la revendication 5, dans lequel le troisième élément de processus d'assistance (123) sélectionne le dispositif d'imagerie (30) capable de capturer une image de surface avant ou une image de surface latérale de la machine de travail (40) ou une image zoomée d'une fixation de pointe (440) dans un cas où la machine de travail (40) est activée.

7. Procédé de sélection d'un dispositif d'imagerie (30), lequel sélectionne au moins l'un parmi une pluralité de dispositifs d'imagerie (30) reliés à un serveur (10), lesdits dispositifs d'imagerie (30) comprenant des dispositifs d'imagerie (30) placés à des positions prédéterminées sur un chantier, capture des images d'un travail d'une machine de travail (40), et assiste le travail lorsqu'un opérateur effectue le travail par l'opération à distance de la machine de travail (40) en utilisant un dispositif de commande à distance (20) comportant un dispositif d'affichage (221), tout en visualisant une image capturée affichée sur le dispositif d'affichage (221), le procédé comprenant :
une première étape d'extraction, comme candidats, des dispositifs d'imagerie (30) incluant la machine de travail (40) dans des plages d'imagerie définies selon des angles de vue préréglés parmi la pluralité de dispositifs d'imagerie (30) ; et
une deuxième étape consistant à sélectionner le dispositif d'imagerie (30) capable d'obtenir la plage d'imagerie incluant une direction ou taille optimale de la machine de travail (40) parmi les candidats et à amener le dispositif d'imagerie (30) sélectionné à fournir une sortie au dispositif d'affichage (221) dans un cas où il est déterminé que la machine de travail (40) a été déplacée.

8. Procédé de sélection d'un dispositif d'imagerie (30), lequel sélectionne au moins l'un parmi une pluralité de dispositifs d'imagerie (30) reliés à un serveur (10), lesdits dispositifs d'imagerie (30) comprenant des dispositifs d'imagerie (30) placés à des positions prédéterminées sur un chantier, capture des images d'un travail d'une machine de travail (40), et assiste le travail lorsqu'un opérateur effectue le travail par l'opération à distance de la machine de travail (40) en utilisant un dispositif de commande à distance (20) comportant un dispositif d'affichage (221), tout en visualisant une image capturée affichée sur le dispositif d'affichage (221), le procédé comprenant :
une première étape d'extraction, comme candidats, des dispositifs d'imagerie (30) incluant la machine de travail (40) dans des plages d'imagerie définies selon des angles de vue préréglés parmi la pluralité de dispositifs d'imagerie (30) ; et
une étape supplémentaire consistant à sélectionner le dispositif d'imagerie (30) capable d'obtenir une plage d'imagerie optimale pour permettre la reconnaissance d'un contenu de travail de la machine de travail (40) parmi les candidats sur la base du contenu de travail et à amener le dispositif d'imagerie (30) sélectionné à fournir une sortie au dispositif d'affichage (221).
